# EUROPÄISCHE PATENTSCHRIFT

(11) **EP 2 936 197 B1**
(45) Veröffentlichungstag und Bekanntmachung des Hinweises auf die Patenterteilung: **29.08.2018**
(21) Anmeldenummer: 13766007.2
(22) Anmeldetag: 18.09.2013
(51) Int. Cl.: B60Q 9/00, G01S 13/93

(54) **VERFAHREN ZUM AUFRECHTERHALTEN EINES WARNSIGNALS IN EINEM KRAFTFAHRZEUG AUFGRUND DER PRÄSENZ EINES ZIELOBJEKTS IN EINEM WARNBEREICH, INSBESONDERE EINEM TOTWINKELBEREICH, ENTSPRECHENDES FAHRERASSISTENZSYSTEM UND KRAFTFAHRZEUG**
METHOD FOR MAINTAINING A WARNING SIGNAL IN A MOTOR VEHICLE ON THE BASIS OF THE PRESENCE OF A TARGET OBJECT IN A WARNING REGION, IN PARTICULAR A BLIND SPOT REGION, CORRESPONDING DRIVER ASSISTANCE SYSTEM, AND MOTOR VEHICLE
PROCÉDÉ DE MAINTIEN D'UN SIGNAL D'ALERTE DANS UN VÉHICULE À MOTEUR EN CAS DE PRÉSENCE D'UN OBJET CIBLE DANS UNE ZONE D'ALERTE, EN PARTICULIER UNE ZONE D'ANGLE MORT, SYSTÈME D'AIDE À LA CONDUITE CORRESPONDANT ET VÉHICULE À MOTEUR

(30) Priorität: 19.12.2012 DE 102012025064
(43) Veröffentlichungstag der Anmeldung: 28.10.2015
(73) Patentinhaber: Valeo Schalter und Sensoren GmbH, 74321 Bietigheim-Bissingen (DE)
(72) Erfinder: KOHLER, Markus, 76337 Waldbronn (DE); LUEBBERT, Urs, 74321 Bietigheim-Bissingen (DE); GEIGER, Roland, 70193 Stuttgart (DE); GOERNER, Stefan, 74321 Bietigheim-Bissingen (DE)
(86) Internationale Anmeldenummer: PCT/EP2013/069404
(87) Internationale Veröffentlichungsnummer: WO 2014/095104

(56) Entgegenhaltungen:
- DE-A1-102006 034 122
- US-A1- 2002 147 534
- US-A1- 2011 291 874
- US-B1- 6 674 394

## Beschreibung

Die Erfindung betrifft ein Verfahren zum Ausgeben eines Warnsignals, mit welchem der Fahrer eines Kraftfahrzeugs vor der Präsenz eines fahrzeugexternen Zielobjekts in einem in Bezug auf das Kraftfahrzeug vorgegebenen Warnbereich gewarnt wird. Mittels eines Radarsensors werden in aufeinanderfolgenden Messzyklen jeweils elektromagnetische Radarsignale in einen Erfassungsbereich des Radarsensors ausgesendet, und von dem Zielobjekt reflektierte Radarsignale werden als Empfangssignale durch den Radarsensor empfangen. Anhand der Empfangssignale wird das Zielobjekt mittels des Radarsensors detektiert und über die Messzyklen in dem Erfassungsbereich verfolgt. Falls das Zielobjekt in den vorgegebenen Warnbereich eintritt, wird das Warnsignal mittels einer Ausgabeeinrichtung ausgegeben bzw. initiiert. Die Erfindung betrifft außerdem ein Fahrerassistenzsystem zum Durchführen eines solchen Verfahrens sowie ein Kraftfahrzeug mit einem derartigen Fahrerassistenzsystem.

Radarsensoren für Kraftfahrzeuge (Automotive Radar Sensors) sind bereits Stand der Technik und werden beispielsweise bei einer Frequenz von ca. 24 GHz oder ca. 79 GHz betrieben. Radarsensoren dienen im Allgemeinen zur Detektion von Zielobjekten in der Umgebung des Kraftfahrzeugs und unterstützen den Fahrer beim Führen des Kraftfahrzeugs in vielfältiger Hinsicht. Das Interesse gilt vorliegend insbesondere einem Totwinkelerkennungssystem (Blind Spot Warning), mittels welchem der Fahrer vor der Präsenz von Zielobjekten im Totwinkelbereich des Kraftfahrzeugs gewarnt wird.

In der US 2011/0291874 A1 ist ein Fahrzeugradarsystem zur Objekterkennung offenbart, bei dem mehrere Detektionsgebiete vorgesehen sind.

In der US 2002/0147534 A1 wird ein System zum Erkennen von nahe an einem Fahrzeug befindlichen Objekten beschreiben, das als Totwinkelassistent ausgeführt sein kann.

Die DE 10 2006 034 122 A1 offenbart ein Fahrerassistenzsystem mit einer Abstandsmesseinrichtung, das zum Überwachen eines toten Winkels an einem Fahrzeug geeignet ist.

Das Patent US 6,674,394 B1 beschreibt ein Verfahren zum Klassifizieren von mittels eines Radarsensors verfolgten Objekten.

Radarsensoren messen einerseits den Abstand zwischen dem Zielobjekt und dem Fahrzeug. Sie messen andererseits auch sowohl die Relativgeschwindigkeit zum Zielobjekt als auch den sogenannten Zielwinkel, d.h. einen Winkel zwischen einer gedachten Verbindungslinie zum Zielobjekt und einer Referenzlinie, etwa der Fahrzeuglängsachse. Mit Hilfe eines Radarsensors kann folglich die jeweils aktuelle Position des Zielobjekts relativ zum Fahrzeug bestimmt werden, und das Zielobjekt kann in dem Erfassungsbereich des Radarsensors verfolgt werden, d.h. die relative Position des Zielobjekts kann über eine Vielzahl von Messzyklen des Radarsensors hinweg fortlaufend bestimmt werden. Das "Tracking" gelingt unter der Voraussetzung, dass die an dem Zielobjekt detektierten Reflexionspunkte über die Messzyklen hinweg stabil bleiben. Radarsensoren werden üblicherweise hinter dem Stoßfänger platziert, beispielsweise in den jeweiligen Eckbereichen des hinteren Stoßfängers. Zur Detektion des Zielobjektes sendet der Radarsensor ein Sendesignal (elektromagnetische Wellen) aus, welches dann an dem zu detektierenden Zielobjekt reflektiert und als Radarecho durch den Radarsensor empfangen wird. Es geht vorliegend insbesondere um den sogenannten Frequenzmodulations-Dauerstrich-Radarsensor ("Frequency Modulated Continuous Wave Radar" oder "FMCW Radar"), bei welchem das ausgesendete Signal eine Sequenz ("Burst") von frequenzmodulierten Chirpsignalen umfasst, welche eines nach dem anderen ausgesendet werden. Entsprechend beinhaltet auch das Empfangssignal des Radarsensors eine solche Vielzahl von Chirpsignalen, welche im Hinblick auf die oben genannten Messgrößen verarbeitet und ausgewertet werden. Das Empfangssignal wird dabei zunächst in das Basisband herabgemischt und anschließend mittels eines Analog-Digital-Konverters in ein digitales Empfangssignal mit einer Vielzahl von Abtastwerten umgewandelt und FFT-transformiert (Fast Fourier Transformation). Die Abtastwerte werden dann mittels einer elektronischen Recheneinrichtung (digitaler Signalprozessor) im Zeitbereich und/oder im Frequenzbereich verarbeitet.

Mit einem Radarsensor wird in horizontaler Richtung typischerweise ein relativ breiter azimutaler Winkelbereich erfasst, der sogar 150° betragen kann. Der Radarsensor weist also einen relativ großen azimutalen Erfassungswinkel auf, so dass das Sichtfeld bzw. der Erfassungsbereich des Radarsensors in Azimutrichtung entsprechend breit ist. Der azimutale Erfassungswinkel ist in der Regel bezüglich einer senkrecht zur vorderen Sensorfläche verlaufenden Radarachse symmetrisch, so dass der azimutale Erfassungswinkel von beispielsweise -75° bis +75° bezüglich der Radarachse bemessen wird. Dieser azimutale Erfassungsbereich kann in kleinere Teilbereiche unterteilt sein, welche einer nach dem anderen durch den Radarsensor bestrahlt bzw. erfasst werden. Zu diesem Zwecke wird beispielsweise die Hauptkeule der Sendeantenne elektronisch in Azimutrichtung verschwenkt, beispielsweise nach dem Phase-Array-Prinzip. Die Empfangsantenne kann in diesem Falle in Azimutrichtung eine Empfangscharakteristik aufweisen, mit welcher der gesamte azimutale Erfassungsbereich abgedeckt wird. Ein solcher Radarsensor ist beispielsweise aus dem Dokument DE 10 2009 057 191 A1 bekannt. Ein weiterer Radarsensor ist aus dem Dokument US 2011/0163909 als bekannt zu entnehmen.

Mit Hilfe eines Radarsensors kann also auch der Totwinkelbereich eines Kraftfahrzeugs überwacht und der Fahrer gegebenenfalls gewarnt werden. Die Funktionalität der Totwinkelüberwachung beruht im Stand der Technik auf der genannten Zielverfolgung: Der Radarsensor detektiert zunächst das Zielobjekt, etwa ein anderes Fahrzeug, und verfolgt dieses Zielobjekt in dem Erfassungsbereich. Tritt das Zielobjekt - etwa beim Überholen des eigenen Kraftfahrzeugs - in einen vorgegebenen Warnbereich, der dem Totwinkelbereich entspricht, wird ein Warnsignal im Kraftfahrzeug ausgegeben. Der Fahrer wird somit über die Präsenz des Zielobjekts im Totwinkelbereich informiert. Um das Zielobjekt über eine Vielzahl von Messzyklen des Radarsensors hinweg verfolgen zu können, ist es nötig, zu ein und demselben Zielobjekt eine ausreichende Anzahl von Rohdetektionen zu erhalten. Dies bedeutet, dass ein in einem bestimmten Messzyklus detektierter Reflexionspunkt des Zielobjekts auch in einem darauffolgenden Messzyklus detektiert werden muss. Eine stabile Verfolgung des Zielobjekts bedeutet also mit anderen Worten, dass die Detektionen jeweils von einem Reflexionspunkt des Zielobjekts stammen, der zwischen aufeinanderfolgenden Messzyklen in seiner Entfernung und seinem Winkel stabil bleibt. Es erfolgt somit eine Zuordnung von in unterschiedlichen Messzyklen detektierten Reflexionspunkten zueinander.

Die Detektion von Reflexionspunkten alleine erfolgt typischerweise im Frequenzbereich. Die Reflexionspunkte eines Zielobjekts bzw. die Zielobjekte sind durch Spitzen im Empfangsspektrum repräsentiert. Die Zielechos und Messrauschen überlagern sich dabei additiv. Das Messrauschen ist frequenzabhängig und steigt mit höheren Frequenzen. Auch durch sogenannte "Clutter", also unerwünschte Reflexionen an Boden, Vegetation und ausgedehnten Infrastrukturobjekten und dergleichen überlagern sich zusätzliche Störsignale frequenzabhängig dem Nutzsignal. Die im Empfangssignal vorhandenen Signalspitzen bzw. Zielechos werden deshalb mit Hilfe eines Schwellwertdetektors detektiert. Liegt die Höhe des Empfangssignals über der Detektionsschwelle, findet eine Detektion statt. Die Detektionsschwelle wird im Betrieb des Radarsensors adaptiv bestimmt, und zwar beispielsweise nach dem CFAR-Verfahren (Constant False Alarm Rate). Gemäß diesem Verfahren wird die Detektionsschwelle derart angepasst, dass sie um einen vorgegebenen Faktor stets oberhalb des Rauschpegels liegt. Ist kein Zielobjekt vorhanden, detektiert der Detektor immer dann fälschlicherweise ein Ziel, wenn das Rauschsignal bzw. Störsignal oberhalb der Detektionsschwelle liegt. Wird die Detektionsschwelle relativ zur Störleistung eingestellt, ergibt sich eine konstante Falschalarmrate, d.h. eine konstante Wahrscheinlichkeit dafür, dass das momentane Störsignal die Detektionsschwelle überschreitet.

Um die genaue Frequenz der Zielechos im Empfangssignal präzise zu bestimmen, wird beispielsweise der COG-Algorithmus (Center of Gravity) angewendet. Dieser Algorithmus macht es möglich, die Messgrößen des Radarsensors genauer zu schätzen und die Zielobjekte somit präzise zu verfolgen.

Für einen Radarsensor stellen Fahrzeuge ausgedehnte Ziele dar, d.h. solche Ziele, die größer als eine einzelne Entfernungsauflösungszelle des Radarsensors sind. In der Praxis kommt es somit zu Problemen bei der Verfolgung von Zielobjekten und somit bei der Ausgabe des Warnsignals an den Fahrer. Bei ausgedehnten Zielen interferieren mehrere Reflexionspunkte nämlich miteinander, und die Detektionen in aufeinanderfolgenden Messzyklen variieren in Entfernung und Winkel relativ stark. Bei zu hohen Variationen schlägt die Datenzuordnung und somit die korrekte Verfolgung eines Zielobjekts fehl. Das Reflexionsverhalten eines Fahrzeugs kann durch eine Vielzahl von elementaren Reflexionen modelliert werden, die sich über mehrere Entfernungsauflösungszellen verteilen, sich aber zum Teil auch innerhalb einer einzelnen Auflösungszelle überlagern und miteinander interferieren. Wäre ein Ziel kleiner als die Auflösungszelle des Radarsensors, würden alle elementaren Reflektoren miteinander interferieren. Die daraus entstehenden Zielmodelle beschreiben ein Punktziel, dessen Reflektivität und damit die Signalamplitude im Radarsensor nach einer statistischen Verteilung schwanken. Ist das Zielobjekt - wie im Falle eines Fahrzeugs - größer als eine einzelne Entfernungsauflösungszelle, schwanken nicht nur die Signalamplituden in den einzelnen Auflösungszellen, sondern die in dem oben genannten COG-Algorithmus gemessene Zielentfernung schwankt zwischen benachbarten Reflexionsgruppen. Die Elementarreflexionen selbst können auch auf der Oberfläche des Fahrzeugs wandern.

Die Interferenzen zwischen den Reflexionen an einem Fahrzeug und das Wandern der gemessenen Reflexionen führt dazu, dass am Eingang des Verfolgungsalgorithmus zeitweise keine stabilen Detektionen vorliegen können, d.h. die Messdaten schwanken so stark, dass eine sinnvolle Zuordnung der Reflexionspunkte zueinander in aufeinanderfolgenden Messzyklen nicht möglich ist.

Diese Problematik tritt besonders stark in Erscheinung, wenn ein Lastkraftwagen seitlich neben dem Kraftfahrzeug fährt und sich im Totwinkelbereich des Kraftfahrzeugs befindet. Das beschriebene Problem wird auch dadurch verstärkt, dass in einigen Ländern die LKWs keinen Unterfahrschutz aufweisen müssen und bei manchen LKWs - den sogenannten "Trailer Trucks" - im mittleren Bereich unterhalb des Anhängers auf der Höhe des Radarsensors keine reflektierenden Teile vorhanden sind. Zwar kann der Radarsensor schwache Reflexionen vom Unterteil des LKWs erkennen, eine Zuordnung von Reflexionspunkten in aufeinanderfolgenden Messzyklen ist aber nicht immer gewährleistet. Bei solchen LKWs ist somit weiterhin auch problematisch, dass aufgrund der relativ geringen Empfindlichkeit des Radarsensors im Nahbereich (2m bis 5m) die schwachen Reflexionen von dem LKW bei Fehlen des Unterschutzes nicht detektiert werden können.

Die Schwierigkeiten mit der Zielverfolgung haben zur Folge, dass auch die Ausgabe des Warnsignals an den Fahrer nicht immer stabil ist. Der Alarm kann kurzzeitig ausbleiben oder flackern, was für den Fahrer verwirrend wirkt und zur Ablenkung des Fahrers führen kann.

Es ist Aufgabe der Erfindung, eine Lösung aufzuzeigen, wie bei einem Verfahren der eingangs genannten Gattung der Fahrer des Kraftfahrzeugs besonders zuverlässig vor der Präsenz des Zielobjektes in dem Warnbereich in der Umgebung des Kraftfahrzeugs gewarnt werden kann.

Diese Aufgabe wird erfindungsgemäß durch ein Verfahren, durch ein Fahrerassistenzsystem sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Ein erfindungsgemäßes Verfahren dient zum Ausgeben eines Warnsignals, mit welchem der Fahrer eines Kraftfahrzeugs vor der Anwesenheit eines Zielobjektes in einem in Bezug auf das Kraftfahrzeug vorgegebenen Warnbereich mittels eines Fahrerassistenzsystems des Kraftfahrzeugs gewarnt wird. Das Fahrerassistenzsystem umfasst einen Radarsensor, mittels welchem in aufeinanderfolgenden Messzyklen des Radarsensors jeweils elektromagnetische Radarsignale in einen Erfassungsbereich des Radarsensors ausgesendet und von dem Zielobjekt reflektierte Radarsignale als Empfangssignale bzw. Empfangsechos empfangen werden. Anhand der Empfangssignale wird das Zielobjekt detektiert und über die Messzyklen hinweg in dem Erfassungsbereich verfolgt. Tritt das Zielobjekt in den vorgegebenen Warnbereich, wird mittels einer Ausgabeeinrichtung das Warnsignal im Innenraum des Kraftfahrzeugs ausgegeben. Nach Eintreten des Zielobjekts in den Warnbereich wird das Ausgeben des Warnsignals solange aufrechterhalten, wie der Radarsensor in seinem Erfassungsbereich innerhalb eines vorgegebenen Entfernungsnahbereiches das Zielobjekt oder ein anderes Zielobjekt detektiert.

Sobald das Zielobjekt also in den vorgegebenen Warnbereich eingetreten ist, wird die Ausgabe des Warnsignals nicht mehr oder nicht mehr nur auf der Basis der Verfolgung des Zielobjekts durchgeführt, sondern die Aufrechterhaltung des Warnsignals erfolgt abhängig davon, ob innerhalb des vorgegebenen Entfernungsnahbereiches - innerhalb einer vorgegebenen Anzahl erster Entfernungsauflösungszellen des Radarsensors - überhaupt eine Detektion durch den Radarsensor stattfindet und dabei insbesondere die Amplitude des Empfangssignals - also die sogenannten Frequenzbins der betrachteten Entfernungsauflösungszellen - eine vorgegebene Detektionsschwelle überschreitet oder nicht. Die Ausgabe des Warnsignals erfolgt somit, solange nach Eintreten des Zielobjekts in den Warnbereich der Radarsensor irgendeinen Reflexionspunkt innerhalb des vorgegebenen Entfernungsbereiches detektiert. Befindet sich in dem vorgegebenen Entfernungsnahbereich ein Ziel, kann dies durch den Radarsensor detektiert werden, ohne dass das Zielobjekt in diesen Bereich auch verfolgt zu werden braucht. Die Nahbereichsdetektionen können zur Aufrechterhaltung des Warnsignals verwendet werden, führen jedoch alleine nicht zur Auslösung des Warnsignals, da durch die Nahbereichsdetektionen nur auf die Präsenz des Zielobjekts im Nahbereich geschlossen werden kann, nicht jedoch auf die genaue Position des Zielobjekts. Durch das erfindungsgemäße Verfahren wird erreicht, dass der Fahrer zuverlässig vor der Präsenz eines Zielobjekts im Warnbereich gewarnt werden kann. Es kommt zu keinem Ausbleiben oder Flackern des Alarms, so dass der Fahrer auch nicht von der aktuellen Straßensituation abgelenkt wird.

In einer Ausführungsform erfolgt die Aufrechterhaltung des Warnsignals unabhängig von der Verfolgung des Zielobjekts im Warnbereich oder gar unter Verzicht auf diese Verfolgung. Es kann also alleine die Rohdetektion im Entfernungsnahbereich darüber entscheiden, ob die Ausgabe des Warnsignals aufrechterhalten wird oder nicht. Somit erübrigt sich eine Verfolgung des Zielobjekts bzw. der Reflexionspunkte innerhalb des Warnbereiches.

Vorzugsweise ist der Warnbereich ein Totwinkelbereich des Kraftfahrzeugs. Bevorzugt ist der Warnbereich seitlich neben dem Kraftfahrzeug definiert, insbesondere unmittelbar anschließend an eine Seitenflanke des Kraftfahrzeugs. Die Breite des Warnbereiches in Fahrzeugquerrichtung kann beispielsweise 2 m betragen; die Länge des Warnbereiches in Fahrzeuglängsrichtung kann z.B. 7 m betragen. In Fahrzeuglängsrichtung gesehen beginnt der Warnbereich vorzugsweise 2 m vor der hinteren Kante des Kraftfahrzeugs und endet bevorzugt 5 m hinter dem Fahrzeug. Somit wird der Fahrer vor Zielobjekten gewarnt, welche tatsächlich eine Gefahr darstellen könnten. Unnötige Alarmsignale werden vermieden.

Die Detektion des Zielobjekts bzw. der Reflexionspunkte in dem Erfassungsbereich des Radarsensors erfolgt bevorzugt durch Vergleichen der Höhe der Empfangssignale mit einer Detektionsschwelle. Überschreitet die Amplitude des Empfangssignals die Detektionsschwelle, liegt eine Detektion vor. Die Detektionsschwelle kann auch im Betrieb des Radarsensors nach dem oben genannten CFAR-Verfahren dynamisch angepasst werden.

Der vorgegebene Entfernungsnahbereich, in welchem nach Rohdetektionen gesucht wird, kann bis zu einem oberen Entfernungsgrenzwert von dem Radarsensor reichen, welcher in einem Wertebereich von 2 m bis 6 m, insbesondere von 3 m bis 5 m, liegt. Der obere Entfernungsgrenzwert des Entfernungsnahbereiches kann beispielsweise 4 m betragen. Wird bis zu diesem Entfernungsgrenzwert ein Reflexionspunkt durch den Radarsensor detektiert, wird die Ausgabe des Warnsignals aufrechterhalten. Es kann gegebenenfalls auch ein unterer Entfernungsgrenzwert definiert werden, ab welchem eine Detektion zur Aufrechterhaltung des Warnsignals führt. Dieser untere Entfernungsgrenzwert kann beispielsweise in einem Wertebereich von 0,5 m bis 1 m liegen. Durch die genannte Auswahl der Entfernungsgrenzwerte für den vorgegebenen Entfernungsnahbereich gelingt es, die Ausgabe des Warnsignals aufrechtzuerhalten, solange sich tatsächlich ein Zielobjekt in dem relevanten Umgebungsbereich des Kraftfahrzeugs befindet. Der Fahrer wird somit durch das Fahrerassistenzsystem besonders wirkungsvoll beim Führen des Kraftfahrzeugs unterstützt.

Der Erfassungswinkel bzw. Öffnungswinkel, insbesondere der azimutale Öffnungswinkel, des Radarsensors kann in mehrere Teilwinkelbereiche unterteilt sein, so dass innerhalb eines Messzyklus des Radarsensors eine Mehrzahl von Teilbereichen des gesamten Erfassungsbereiches einer nach dem anderen durch den Radarsensor erfasst werden, nämlich insbesondere in Azimutrichtung. Dies bedeutet beispielsweise, dass die Hauptkeule der Sendeantenne und/oder der Empfangsantenne des Radarsensors insbesondere in Azimutrichtung elektronisch verschwenkt wird, um mit einer relativ schmalen Hauptkeule insgesamt einen breiten Erfassungsbereich erfassen zu können. Das Ausgeben des Warnsignals wird vorzugsweise aufrechterhalten, solange der Radarsensor in zumindest einem Teilbereich innerhalb des vorgegebenen Entfernungsnahbereiches, insbesondere in zumindest zwei - bevorzugt unmitelbar benachbarten - Teilbereichen innerhalb des vorgegebenen Entfernungsnahbereiches, einen Reflexionspunkt detektiert. Zur Aufrechterhaltung des Warnsignals können dabei entweder alle Teilbereich des gesamten Erfassungsbereiches oder aber lediglich eine Untermenge der Teilbereiche auf Reflexionen hin überwacht werden. Somit kann die Winkelbreite des vorgegebenen Entfernungsnahbereiches gezielt im Hinblick auf die Aufrechterhaltung des Warnsignals eingestellt werden, nämlich durch entsprechende Auswahl der Teilbereiche, in denen nach Reflexionspunkten gesucht werden soll.

Die Aufrechterhaltung des Warnsignals kann auch plausibilisiert werden: Das Ausgeben des Warnsignals kann aufrechterhalten werden, solange die Detektion innerhalb des vorgegebenen Entfernungsnahbereiches in zumindest zwei, insbesondere unmittelbar benachbarten, Entfernungsauflösungszellen des Radarsensors erfolgt. Ergänzend oder alternativ kann auch vorgesehen sein, dass das Warnsignal aufrechterhalten wird, solange die Detektion innerhalb des vorgegebenen Entfernungsnahbereiches in zumindest zwei, insbesondere unmittelbar benachbarten, Dopplerauflösungszellen stattfindet. Das Warnsignal wird somit nur dann aufrechterhalten, wenn die Detektion im Entfernungsnahbereich auf tatsächlich vorhandene Zielobjekte, insbesondere andere Fahrzeuge, zurückzuführen ist.

Für die Aufrechterhaltung des Warnsignals kann auch ein zusätzliches Kriterium vorgegeben sein: Nach Eintreten des Zielobjekts in den Warnbereich kann das Ausgeben des Warnsignals aufrechterhalten werden, solange die folgenden beiden Kriterien gleichzeitig erfüllt sind: einerseits solange der Radarsensor in dem vorgegebenen Entfernungsnahbereich irgendein Zielobjekt detektiert und andererseits solange der Radarsensor in einem in Bezug auf das Kraftfahrzeug vorgegebenen, von dem Warnbereich verschiedenen Verfolgungsbereich zumindest einen Reflexionspunkt eines Zielobjekts verfolgt. Neben dem Warnbereich wird also ein zusätzlicher Verfolgungsbereich in der Umgebung des Kraftfahrzeugs definiert, und das Warnsignal wird nur dann aufrechterhalten, wenn neben dem ersten Kriterium zusätzlich auch das zweite Kriterium erfüllt ist, dass sich in diesem Verfolgungsbereich aktuell stabile Reflexionspunkte befinden, die durch den Radarsensor verfolgt werden bzw. deren aktuelle Position relativ zum Radarsensor bekannt ist. In dem Verfolgungsbereich muss somit zumindest ein validierter Reflexionspunkt (Track) gegeben sein, welcher bestimmte Kriterien erfüllt, wie beispielsweise existiert bereits seit einer vorbestimmten Anzahl von Messzyklen und/oder hat eine absolute Geschwindigkeit größer als Null und/oder hat sich mehr als eine vorgegebene Weglänge bewegt und dergleichen. Durch Definition des Verfolgungsbereiches kann der Fahrer des Kraftfahrzeugs besonders zuverlässig vor größeren Fahrzeugen, wie insbesondere vor Lastkraftwägen, gewarnt werden, die sich im Totwinkelbereich befinden. Bei großen Zielobjekten, wie einem LKW, sind meistens viele Detektionspunkte auch am hinteren Teil des Fahrzeugs vorhanden. Es sind meistens mehrere Detektionspunkte vorhanden, die verfolgt werden können, die jedoch außerhalb des Warnbereichs liegen. Solche LKWs stellen nämlich besonders ausgedehnte Zielobjekte dar, die sich über eine große Vielzahl von Auflösungszellen des Radarsensors erstrecken. Gelangt ein solcher LKW in den Warnbereich, so liegt lediglich ein Bereich des LKWs innerhalb des Warnbereiches, während ein größerer Abschnitt des LKWs außerhalb des Warnbereiches liegt. Der außerhalb des Warnbereiches liegende Bereich des LKWs verursacht dann Reflexionspunkte, die durch den Radarsensor verfolgt werden können.

Um auch bei solchen ausgedehnten Fahrzeugen den Fahrer möglichst zuverlässig und fehlerfrei vor der Gefahr zu warnen, ist in einer Ausführungsform vorgesehen, dass der Verfolgungsbereich in Fahrzeuglängsrichtung hinter dem Warnbereich definiert wird und sich in Fahrzeuglängsrichtung an den Warnbereich unmittelbar anschließt. Die Länge des Verfolgungsbereiches in Fahrzeuglängsrichtung kann in einem Wertebereich von 5 m bis 15 m, insbesondere von 8 m bis 10 m, liegen. Die Länge kann beispielsweise 9 m betragen. Demgegenüber kann die Breite des Verfolgungsbereiches in Fahrzeugquerrichtung in einem Wertebereich von 1 m bis 3 m liegen, insbesondere 2 m betragen. Die Breite des Verfolgungsbereiches kann also der Breite des Warnbereiches entsprechen.

Die Erfindung betrifft außerdem ein Fahrerassistenzsystem, welches zum Durchführen eines erfindungsgemäßen Verfahrens ausgebildet ist. Ein erfindungsgemäßes Kraftfahrzeug, insbesondere ein Personenkraftwagen, umfasst ein erfindungsgemäßes Fahrerassistenzsystem. Die mit Bezug auf das erfindungsgemäße Verfahren vorgestellten bevorzugten Ausführungsformen und deren Vorteile gelten entsprechend für das erfindungsgemäße Fahrerassistenzsystem sowie für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels, wie auch unter Bezugnahme auf die beigefügten Zeichnungen näher erläutert.

Es zeigen:
- Fig. 1: in schematischer Darstellung ein Kraftfahrzeug mit Radarsensoren gemäß einer Ausführungsform der Erfindung; und
- Fig. 2: in schematischer Darstellung das Kraftfahrzeug, wobei ein Verfahren gemäß einer Ausführungsform der Erfindung näher erläutert wird.

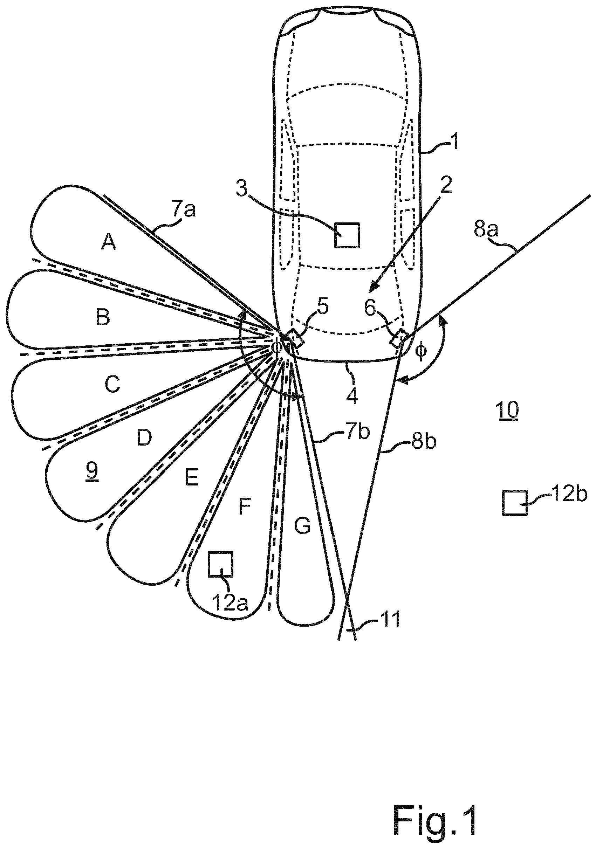

Ein in Fig. 1 dargestelltes Kraftfahrzeug 1 ist beispielsweise ein Personenkraftwagen. Das Kraftfahrzeug 1 umfasst ein Fahrerassistenzsystem 2, welches den Fahrer beim Führen des Kraftfahrzeugs 1 unterstützt. Das Fahrerassistenzsystem 2 ist ein Totwinkelüberwachungssystem, welches zum Warnen des Fahrers vor der Präsenz von Zielobjekten im Totwinkelbereich ausgebildet ist. Zum Fahrerassistenzsystem 2 gehören zwei Radarsensoren 5, 6, welche hinter einem hinteren Stoßfänger 4 des Kraftfahrzeugs 1 verdeckt angeordnet sind. Der erste Radarsensor 5 ist in einem linken hinteren Eckbereich angeordnet, während der zweite Radarsensor 6 in einem rechten hinteren Eckbereich des Kraftfahrzeugs 1 angeordnet ist. Beide Radarsensoren 5, 6 befinden sich hinter dem Stoßfänger 4 und sind somit von außerhalb des Fahrzeugs 1 nicht sichtbar. Das Fahrerassistenzsystem 2 umfasst außerdem eine mit den Radarsensoren 5, 6 elektrisch gekoppelte Ausgabeeinrichtung 3, welche zum Ausgeben eines Warnsignals an den Fahrer ausgebildet ist. Das Warnsignal kann beispielsweise ein akustischer Alarm und/oder eine optische Anzeige sein. Mit dem Warnsignal wird der Fahrer vor der Präsenz von Zielobjekten im Totwinkelbereich gewarnt.

Die Radarsensoren 5, 6 sind im Ausführungsbeispiel Frequenzmodulations-Dauerstrich-Radarsensoren (FMCW). Die Radarsensoren 5, 6 besitzen jeweils einen azimutalen Erfassungsbereich φ, welcher in Fig. 1 durch zwei Linien 7a, 7b (für den linken Radarsensor 5) bzw. 8a, 8b (für den rechten Radarsensor 6) begrenzt ist. Der azimutale Erfassungswinkel φ beträgt beispielsweise 150°. Durch diesen Winkel φ ist jeweils ein Sichtfeld bzw. Erfassungsbereich 9 bzw. 10 des jeweiligen Radarsensors 5, 6 in Azimutrichtung und somit in horizontaler Richtung definiert. Die Sichtfelder 9, 10 können sich auch gegenseitig überlappen, so dass ein Überlappungsbereich 11 gegeben ist. Jeder Radarsensor 5, 6 beinhaltet eine integrierte Recheneinrichtung beispielsweise in Form eines digitalen Signalprozessors, welcher den Radarsensor 5, 6 ansteuert und außerdem die Empfangssignale verarbeitet und auswertet. Alternativ kann aber auch eine für die beiden Sensoren 5, 6 gemeinsame und externe Recheneinrichtung vorgesehen sein, welche dann die Empfangssignale der beiden Sensoren 5, 6 verarbeiten kann.

In ihren jeweiligen Sichtfeldern 9, 10 können die Radarsensoren 5, 6 fahrzeugexterne Zielobjekte 12a (links) und 12b (rechts) detektieren. Insbesondere können die Radarsensoren 5, 6 die Entfernung der Zielobjekte 12a bzw. 12b von dem jeweiligen Radarsensor 5, 6, sowie jeweils den Zielwinkel und die Relativgeschwindigkeit der Zielobjekte 12a bzw. 12b bezüglich des Kraftfahrzeugs 1 bestimmen - dies sind Messgrößen der Radarsensoren 5, 6.

Bezugnehmend weiterhin auf Fig. 1 kann der Radarsensor 5 - und analog auch der Sensor 6 - verschiedene Teilbereiche A, B, C, D, E, F, G des azimutalen Sichtfeldes 9 nacheinander bestrahlen. Diese Teilbereiche A bis G stellen Winkelbereiche dar, wobei zur Erfassung der Teilbereiche A bis G nacheinander beispielsweise eine Sendekeule der Sendeantenne des Radarsensors 5 elektronisch in Azimutrichtung verschwenkt wird, nämlich nach dem Phase-Array-Prinzip. Die unterschiedlichen Ausrichtungen der Sendekeule sind in Fig. 1 für die unterschiedlichen Teilbereiche A bis G schematisch angedeutet. Die Empfangsantennen des Radarsensors 5 können in Azimutrichtung insgesamt eine breite Empfangscharakteristik aufweisen, mit welcher das gesamte azimutale Sichtfeld 9 abgedeckt wird. Andere Ausgestaltungen können alternativ schmale Empfangswinkelbereiche in Verbindung mit breiten Sendekeulen realisieren.

In Fig. 1 sind der Übersicht halber lediglich die Teilbereiche A bis G des Sichtfeldes 9 des ersten Radarsensors 5 dargestellt. Entsprechend ist hier jedoch auch das horizontale Sichtfeld 10 des zweiten Radarsensors 6 in mehrere Teilbereiche unterteilt. Wenngleich sich die weitere Beschreibung auf die Funktionsweise des ersten Sensors 5 bezieht, entspricht die Funktionsweise des zweiten Sensors 6 der des ersten Sensors 5.

Die Anzahl der Teilbereiche A bis G ist in Fig. 1 lediglich beispielhaft dargestellt und kann je nach Ausführungsform unterschiedlich sein. Im Ausführungsbeispiel sind insgesamt sieben Teilbereiche A bis G vorgesehen, welche einer nach dem anderen durch den Radarsensor 5 beleuchtet werden. Es können aber auch vier solche "Beams" vorgesehen sein oder es kann auch lediglich ein einziges "Beam" vorgesehen sein.

Die Funktionsweise des Radarsensors 5 ist wie folgt: In einem einzelnen Messzyklus des Radarsensors 5 wird die Hauptkeule der Sendeantenne einmal vom Teilbereich A bis hin zum Teilbereich G schrittweise verschwenkt, so dass die Teilbereiche A bis G einer nach dem anderen beleuchtet werden. Für jeden Teilbereich A bis G wird dabei jeweils eine zeitliche Sequenz von frequenzmodulierten Chirpsignalen (chirps) ausgesendet. Zunächst wird eine solche Sequenz von Chirpsignalen für den Teilbereich A ausgesendet. Nach einer vorgegebenen Sendepause wird dann eine Sequenz von Chirpsignalen in den Teilbereich B ausgesendet. Nach einer weiteren vorgegebenen Sendepause wird dann der Teilbereich C bestrahlt usw.

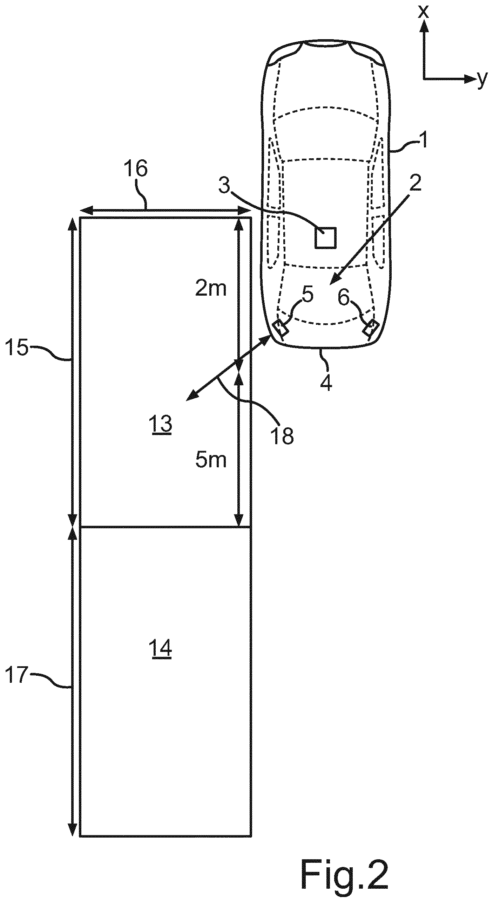

In Fig. 2 ist nun das Kraftfahrzeug 1 in einer Draufsichtdarstellung gezeigt, wobei in Bezug auf das Kraftfahrzeug 1 in seiner Umgebung ein Warnbereich 13 sowie ein Verfolgungsbereich 14 vorgegeben sind. Der Warnbereich 13 entspricht dem Totwinkelbereich des Kraftfahrzeugs 1. Der Übersicht halber ist der Warnbereich 13 lediglich auf der linken Seite des Kraftfahrzeugs 1 abgebildet; ein entsprechender Bereich ist jedoch auch auf der rechten Seite definiert und wird mit dem Radarsensor 6 erfasst.

Der Warnbereich 13 hat in Fahrzeuglängsrichtung x eine Länge 15 von beispielsweise 7 m. Der Warnbereich 13 ist ein rechteckiger Bereich, der von der hinteren Kante bzw. von dem Stoßfänger 4 des Kraftfahrzeugs 1 gesehen einerseits beispielsweise 2 m nach vorne und andererseits 5 m nach hinten reicht. Die Breite 16 des Warnbereiches 13 in Fahrzeugquerrichtung y beträgt beispielsweise 2 m.

Auch der Verfolgungsbereich 14 ist ein rechteckiger Bereich, der sich in Fahrzeuglängsrichtung x unmittelbar an den Warnbereich 13 hinter diesem anschließt. Die Länge 17 des Verfolgungsbereiches 14 kann beispielsweise 9 m betragen, so dass der Verfolgungsbereich 14 bei einer Entfernung 14 m hinter dem Kraftfahrzeug 1 endet. Die Breite des Verfolgungsbereiches 14 beträgt ebenfalls 2 m.

Ein Verfahren gemäß einer Ausführungsform der Erfindung wird nachfolgend näher beschrieben: Mit dem Radarsensor 5 wird ein Zielobjekt 12a (Fig. 1) detektiert, das sich beispielsweise in dem Verfolgungsbereich 14 befindet. Dieses Zielobjekt ist beispielsweise ein LKW. Die ausgesendeten Radarwellen reflektieren dabei an einer Vielzahl von Reflexionspunkten des LKWs. Es erfolgt eine Zuordnung der Reflexionspunkte zu demselben Zielobjekt, nämlich dem LKW. Der Radarsensor 5 verfolgt das Zielobjekt über eine Vielzahl von Messzyklen hinweg. Nun gelangt das Zielobjekt in den Warnbereich 13 hinein. Die Ausgabeeinrichtung 3 fängt mit der Ausgabe des Warnsignals (z.B. kontinuierlich bzw. fortlaufend) an. Nun braucht das im Warnbereich 13 befindliche Zielobjekt nicht mehr weiterverfolgt zu werden. Nach Eintritt des Zielobjekts in den Warnbereich 13 überprüft der Radarsensor 5, ob in einem vorgegebenen und in Fig. 2 lediglich schematisch angedeuteten Entfernungsnahbereich 18 zumindest ein Reflexionspunkt vorhanden ist oder nicht. Es wird also überprüft, ob in dem Entfernungsnahbereich 18 überhaupt eine Reflexion und somit eine Detektion im Sinne einer Schwellwertüberschreitung stattfindet oder nicht. Ist dieses Kriterium und zusätzlich noch die Bedingung erfüllt, dass in dem Verfolgungsbereich 14 zumindest ein Reflexionspunkt momentan durch den Radarsensor 5 verfolgt wird, so wird die Ausgabe des Warnsignals aufrechterhalten. Erst wenn keine Detektion im Entfernungsnahbereich 18 stattfindet oder kein Reflexionspunkt (Track) im Verfolgungsbereich 14 verfolgt wird, wird die Ausgabe des Warnsignals unterbrochen.

Eine Detektion im Entfernungsnahbereich 18 bedeutet insbesondere, dass innerhalb einer vorgegebenen Entfernung vom Sensor 5 überhaupt irgendein Reflexionspunkt detektiert wird, dessen Zielecho eine Detektionsschwelle überschreitet. Hinsichtlich der Winkelausdehnung des Entfernungsnahbereiches 18 können dabei entweder alle Teilbereiche A bis G auf Reflexionspunkte hin untersucht werden oder es kann lediglich eine Untermenge der Teilbereiche A bis G betrachtet werden. Beispielsweise können lediglich die mittleren Teilbereiche B bis F untersucht werden.

Der Entfernungsnahbereich 18 endet beispielsweise bei einem oberen Entfernungsgrenzwert vom Radarsensor 5 von beispielsweise 2,4 m bis 4 m. Dies kann den vorderen zwei oder drei oder vier oder fünf Entfernungsauflösungszellen des Radarsensors 5 entsprechen.

Das Warnsignal wird also sofort dann aktiviert, wenn ein validierter Reflexionspunkt in den Warnbereich 13 eintritt, d.h. ein solcher Reflexionspunkt, welcher bereits früher verfolgt wurde und dabei vorbestimmte Kriterien erfüllt, wie beispielsweise, dass er bereits seit einer vorbestimmten Zeitdauer verfolgt wurde und/oder dass er eine absolute Geschwindigkeit größer als Null aufweist und/oder dass er sich mehr als eine vorgegebene Wegmenge bewegt hat. Gelangt ein solcher Reflexionspunkt in den Warnbereich 13, erfolgt die Ausgabe des Warnsignals, solange einerseits eine Detektion irgendeines Reflexionspunkts in dem Entfernungsnahbereich stattfindet und zum anderen zumindest ein Reflexionspunkt im Verfolgungsbereich 14 momentan verfolgt wird, d.h. seine aktuelle Position ist im Radarsensor 5 stets bekannt.

Das erstgenannte Kriterium kann auch dahingehend konkretisiert werden, dass in zumindest zwei benachbarten Teilbereichen A bis G jeweils innerhalb des vorgegebenen Entfernungsnahbereiches 18 gleichzeitig, also innerhalb des gleichen Messzyklus, jeweils eine Detektion stattfindet. Dieses Kriterium kann auch weiterhin verfeinert werden, nämlich derart, dass eine gleichzeitige Detektion in zumindest zwei Entfernungsauflösungszellen und/oder Dopplerauflösungszellen des Radarsensors 5 vorausgesetzt wird.

## Patentansprüche

1. Verfahren zum Ausgeben eines Warnsignals zum Warnen des Fahrers eines Kraftfahrzeugs (1) vor der Präsenz eines fahrzeugexternen Zielobjekts (12) in einem in Bezug auf das Kraftfahrzeug (1) vorgegebenen Warnbereich (13) mittels eines Fahrerassistenzsystems (2) des Kraftfahrzeugs (1), bei welchem:
- mittels eines Radarsensors (5, 6) in aufeinanderfolgenden Messzyklen des Radarsensors (5, 6) jeweils elektromagnetische Radarsignale in einen Erfassungsbereich (9, 10) des Radarsensors (5, 6) ausgesendet und von dem Zielobjekt (12) reflektierte Radarsignale als Empfangssignale empfangen werden;
- anhand der Empfangssignale das Zielobjekt (12) mittels des Radarsensors (5, 6) detektiert und über die Messzyklen in dem Erfassungsbereich (9, 10) verfolgt wird;
- falls das verfolgte Zielobjekt (12) in den vorgegebenen Warnbereich (13) eintritt, das Warnsignal mittels einer Ausgabeeinrichtung (3) ausgegeben wird,
**dadurch gekennzeichnet, dass**
nach Eintreten des verfolgten Zielobjekts (12) in den Warnbereich (13) das Ausgeben des Warnsignals solange aufrechterhalten wird, wie der Radarsensor (5, 6) in seinem Erfassungsbereich (9, 10) innerhalb eines vorgegebenen Entfernungsnahbereichs (18) das Zielobjekt (12) oder ein anderes Zielobjekt (12) detektiert.

2. Verfahren nach Anspruch 1,
**dadurch gekennzeichnet, dass**
unabhängig von der Verfolgung des Zielobjekts (12) in dem Warnbereich (13) oder unter Verzicht auf die Verfolgung des Zielobjekts (12) in dem Warnbereich (13) das Ausgeben des Warnsignals aufrechterhalten wird, solange der Radarsensor (5, 6) innerhalb des vorgegebenen Entfernungsnahbereichs (18) das Zielobjekt (12) oder ein anderes Zielobjekt (12) detektiert.

3. Verfahren nach Anspruch 1 oder 2,
**dadurch gekennzeichnet, dass**
der Warnbereich (13) ein Totwinkelbereich des Kraftfahrzeugs (1) ist.

4. Verfahren nach einem der vorhergehenden Ansprüche,
**dadurch gekennzeichnet, dass**
das Detektieren des Zielobjekts (12) in dem Erfassungsbereich (9, 10) durch Vergleichen der Höhe der Empfangsignale mit einer Detektionsschwelle erfolgt.

5. Verfahren nach einem der vorhergehenden Ansprüche,
**dadurch gekennzeichnet, dass**
der Entfernungsnahbereich (18) bis zu einem oberen Entfernungsgrenzwert von dem Radarsensor (5, 6) reicht, der in einem Wertebereich von 2 m bis 6 m, insbesondere von 3 m bis 5 m, liegt.

6. Verfahren nach einem der vorhergehenden Ansprüche,
**dadurch gekennzeichnet, dass**
innerhalb eines Messzyklus des Radarsensors (5, 6) eine Vielzahl von Teilbereichen (A bis G) des gesamten Erfassungsbereichs (9, 10) einer nach dem anderen durch den Radarsensor (5, 6) erfasst werden und das Ausgeben des Warnsignals aufrechterhalten wird, solange der Radarsensor (5, 6) in zumindest einem Teilbereich (A bis G), insbesondere in zumindest zwei Teilbereichen (A bis G) gleichzeitig, innerhalb des vorgegebenen Entfernungsnahbereichs (18) das Zielobjekt (12) oder ein anderes Zielobjekt (12) detektiert.

7. Verfahren nach einem der vorhergehenden Ansprüche,
**dadurch gekennzeichnet, dass**
das Ausgeben des Warnsignals aufrechterhalten wird, solange die Detektion innerhalb des vorgegebenen Entfernungsnahbereichs (18) in zumindest zwei Entfernungsauflösungszellen und/oder in zumindest zwei Dopplerauflösungszellen des Radarsensors (5, 6) erfolgt.

8. Verfahren nach einem der vorhergehenden Ansprüche,
**dadurch gekennzeichnet, dass**
nach Eintreten des Zielobjekts (12) in den Warnbereich (13) das Ausgeben des Warnsignals aufrechterhalten wird, solange die folgenden beiden Kriterien gleichzeitig erfüllt sind:
- solange der Radarsensor (5, 6) in seinem Erfassungsbereich (9, 10) innerhalb des vorgegebenen Entfernungsnahbereichs (18) das Zielobjekt (12) oder ein anderes Zielobjekt (12) detektiert und
- solange der Radarsensor (5, 6) in einem in Bezug auf das Kraftfahrzeug (1) vorgegebenen, von dem Warnbereich (13) verschiedenen Verfolgungsbereich (14) zumindest ein Zielobjekt (12) verfolgt.

9. Verfahren nach Anspruch 8,
**dadurch gekennzeichnet, dass**
der Verfolgungsbereich (14) in Fahrzeuglängsrichtung (x) hinter dem Warnbereich (13) definiert wird und sich in Fahrzeuglängsrichtung (x) an den Warnbereich (13) unmittelbar anschließt.

10. Verfahren nach Anspruch 8 oder 9,
**dadurch gekennzeichnet, dass**
die Länge (17) des Verfolgungsbereichs (14) in Fahrzeuglängsrichtung (x) in einem Wertebereich von 5 m bis 15 m, insbesondere von 8 m bis 10 m, liegt.

11. Verfahren nach einem der Ansprüche 8 bis 10,
**dadurch gekennzeichnet, dass**
die Breite (16) des Verfolgungsbereichs (14) in Fahrzeugquerrichtung (y) in einem Wertebereich von 1 m bis 3 m liegt, insbesondere 2 m beträgt, und/oder der Breite (14) des Warnbereichs (13) entspricht.

12. Fahrerassistenzsystem (2) für ein Kraftfahrzeug (1), wobei das Fahrerassistenzsystem (2) zum Ausgeben eines Warnsignals bei Präsenz eines Zielobjekts (12) in einem in Bezug auf das Kraftfahrzeug (1) vorgegebenen Warnbereich (13) ausgebildet ist und einen Radarsensor (5, 6) umfasst, der dazu ausgebildet ist, in aufeinanderfolgenden Messzyklen jeweils elektromagnetische Radarsignale in einen Erfassungsbereich (9, 10) des Radarsensors (5, 6) auszusenden, von dem Zielobjekt (12) reflektierte Radarsignale als Empfangssignale zu empfangen und anhand der Empfangssignale das Zielobjekt (12) zu detektieren und über die Messzyklen in dem Erfassungsbereich (9, 10) zu verfolgen, und wobei das Fahrerassistenzsystem (2) weiterhin eine Ausgabeeinrichtung (3) umfasst, die dazu ausgelegt ist, das Warnsignal auszugeben, falls das verfolgte Zielobjekt (12) in den vorgegebenen Warnbereich (13) eintritt,
**dadurch gekennzeichnet, dass**
die Ausgabeeinrichtung (3) dazu ausgelegt ist, nach Eintreten des verfolgten Zielobjekts (12) in den Warnbereich (13) das Ausgeben des Warnsignals aufrechtzuerhalten, solange der Radarsensor (5, 6) in seinem Erfassungsbereich (9, 10) innerhalb eines vorgegebenen Entfernungsnahbereichs (18) das Zielobjekt (12) oder ein anderes Zielobjekt (12) detektiert.

13. Kraftfahrzeug (1) mit einem Fahrerassistenzsystem (2) nach Anspruch 12.

## Claims

1. Method for the output of a warning signal for warning the driver of a motor vehicle (1) about the presence of a vehicle-external target object (12) in a warning region (13), which is prescribed in relation to the motor vehicle (1), by means of a driver assistance system (2) of the motor vehicle (1), in which:
- a radar sensor (5, 6) is used to transmit electromagnetic radar signals into a sensing region (9, 10) of the radar sensor (5, 6) in each of successive measurement cycles of the radar sensor (5, 6) and to receive radar signals reflected by the target object (12) as received signals;
- the received signals are used for detection of the target object (12) by means of the radar sensor (5, 6) and for tracking said target object in the sensing region (9, 10) over the measurement cycles;
- if the tracked target object (12) enters the prescribed warning region (13), the warning signal is output by means of an output device (3),
**characterized in that**
after the tracked target object (12) enters the warning region (13) the output of the warning signal is maintained for as long as the radar sensor (5, 6) detects the target object (12) or another target object (12) in its sensing region (9, 10) within a prescribed close range (18).

2. Method according to Claim 1,
**characterized in that**
independently of the tracking of the target object (12) in the warning region (13) or without the use of the tracking of the target object (12) in the warning region (13) the output of the warning signal is maintained so long as the radar sensor (5, 6) detects the target object (12) or another target object (12) within the prescribed close range (18).

3. Method according to Claim 1 or 2,
**characterized in that**
the warning region (13) is a blind spot of the motor vehicle (1).

4. Method according to one of the preceding claims,
**characterized in that**
the detection of the target object (12) in the sensing region (9, 10) is effected by comparing the level of the received signals with a detection threshold.

5. Method according to one of the preceding claims
**characterized in that**
the close range (18) stretches as far as an upper distance limit value from the radar sensor (5, 6), which is in a value range from 2 m to 6 m, particularly from 3 m to 5 m.

6. Method according to one of the preceding claims,
**characterized in that**
within a measurement cycle of the radar sensor (5, 6) a multiplicity of subregions (A to G) of the whole sensing region (9, 10) are sensed by the radar sensor (5, 6) one after the other and the output of the warning signal is maintained so long as the radar sensor (5, 6) detects the target object (12) or another target object (12) within the prescribed close range (18) in at least one subregion (A to G), particularly in at least two subregions (A to G) simultaneously.

7. Method according to one of the preceding claims,
**characterized in that**
the output of the warning signal is maintained so long as the detection within the prescribed close range (18) is effected in at least two distance resolution cells and/or in at least two Doppler resolution cells of the radar sensor (5, 6).

8. Method according to one of the preceding claims,
**characterized in that**
after the target object (12) enters the warning region (13) the output of the warning signal is maintained so long as the following two criteria are simultaneously met:
- so long as the radar sensor (5, 6) detects the target object (12) or another target object (12) in its sensing region (9, 10) within the prescribed close range (18) and
- so long as the radar sensor (5, 6) tracks at least one target object (12) in a tracking region (14) that is prescribed in relation to the motor vehicle (1) and different from the warning region (13).

9. Method according to Claim 8,
**characterized in that**
the tracking region (14) is defined behind the warning region (13) in the vehicle longitudinal direction (x) and directly adjoins the warning region (13) in the vehicle longitudinal direction (x).

10. Method according to Claim 8 or 9,
**characterized in that**
the length (17) of the tracking region (14) in the vehicle longitudinal direction (x) is in a value range from 5 m to 15 m, particularly from 8 m to 10 m.

11. Method according to one of Claims 8 to 10,
**characterized in that**
the width (16) of the tracking region (14) in the vehicle transverse direction (y) is in a value range from 1 m to 3 m, is particularly 2 m, and/or corresponds to the width (14) of the warning region (13).

12. Driver assistance system (2) for a motor vehicle (1), wherein the driver assistance system (2) is designed to output a warning signal when a target object (12) is present in a warning region (13) prescribed in relation to the motor vehicle (1), and comprises a radar sensor (5, 6) that is designed to transmit electromagnetic radar signals into a sensing region (9, 10) of the radar sensor (5, 6) in each of successive measurement cycles, to receive radar signals reflected by the target object (12) as received signals and to use the received signals to detect the target object (12) and to track said target object in the sensing region (9, 10) over the measurement cycles, and wherein the driver assistance system (2) additionally comprises an output device (3) that is designed to output the warning signal if the tracked target object (12) enters the prescribed warning region (13),
**characterized in that**
the output device (3) is designed so that after the tracked target object (12) enters the warning region (13) it maintains the output of the warning signal so long as the radar sensor (5, 6) detects the target object (12) or another target object (12) in its sensing region (9, 10) within a prescribed close range (18).

13. Motor vehicle (1) having a driver assistance system (2) according to Claim 12.

## Revendications

1. Procédé pour émettre un signal d'alerte destiné à alerter un conducteur d'un véhicule automobile (1) de la présence d'un objet cible (12) externe au véhicule dans une zone d'alerte (13) prédéfinie en référence au véhicule automobile (1) au moyen d'un système d'assistance au conducteur (2) du véhicule automobile (1), procédé selon lequel :
- un capteur radar (5, 6) émet respectivement, au cours de cycles de mesure successifs du capteur radar (5, 6), des signaux radar électromagnétiques dans une zone de balayage (9, 10) du capteur radar (5, 6) et reçoit, sous forme de signaux reçus, des signaux radar réfléchis par l'objet cible (12) ;
- l'objet cible (12) est détecté au moyen du capteur radar (5, 6) à l'aide des signaux reçus et suivi dans la zone de balayage (9, 10) sur les cycles de mesure ;
- si l'objet cible (12) suivi pénètre dans la zone d'alerte (13) prédéfinie, le signal d'alerte est émis au moyen d'un dispositif de sortie (3),
**caractérisé en ce que**
après la pénétration de l'objet cible (12) suivi dans la zone d'alerte (13), l'émission du signal d'alerte est maintenue tant que le capteur radar (5, 6) détecte l'objet cible (12) ou un autre objet cible (12) dans sa zone de balayage (9, 10) à l'intérieur d'une zone de proximité d'éloignement (18) prédéfinie.

2. Procédé selon la revendication 1, **caractérisé en ce que** l'émission du signal d'alerte est maintenue indépendamment du suivi de l'objet cible (12) dans la zone d'alerte (13) ou en renonçant au suivi de l'objet cible (12) dans la zone d'alerte (13) tant que le capteur radar (5, 6) détecte l'objet cible (12) ou un autre objet cible (12) à l'intérieur de la zone de proximité d'éloignement (18) prédéfinie.

3. Procédé selon la revendication 1 ou 2, **caractérisé en ce que** la zone d'alerte (13) est une zone d'angle mort du véhicule automobile (1).

4. Procédé selon l'une des revendications précédentes, **caractérisé en ce que** la détection de l'objet cible (12) dans la zone de balayage (9, 10) est effectuée par une comparaison de l'amplitude des signaux reçus avec un seuil de détection.

5. Procédé selon l'une des revendications précédentes, **caractérisé en ce que** la zone de proximité d'éloignement (18) s'étend jusqu'à une valeur limite d'éloignement du capteur radar (5, 6) qui se trouve dans une plage de valeurs de 2 m à 6 m, notamment de 3 m à 5 m.

6. Procédé selon l'une des revendications précédentes, **caractérisé en ce qu'**une pluralité de zones partielles (A à G) de la zone de balayage (9, 10) complète sont balayées l'une après l'autre par le capteur radar (5, 6) à l'intérieur d'un cycle de mesure du capteur radar (5, 6) et l'émission du signal d'alerte est maintenue tant que le capteur radar (5, 6) détecte l'objet cible (12) ou un autre objet cible (12) à l'intérieur de la zone de proximité d'éloignement (18) prédéfinie dans au moins une zone partielle (A à G), de préférence simultanément dans au moins deux zones partielles (A à G).

7. Procédé selon l'une des revendications précédentes, **caractérisé en ce que** l'émission du signal d'alerte est maintenue tant que la détection à l'intérieur de la zone de proximité d'éloignement (18) prédéfinie s'effectue dans au moins deux cellules de résolution d'éloignement et/ou dans au moins deux cellules de résolution Doppler du capteur radar (5, 6).

8. Procédé selon l'une des revendications précédentes, **caractérisé en ce que** lors de la pénétration de l'objet cible (12) dans la zone d'alerte (13), l'émission du signal d'alerte est maintenue tant que les deux critères ci-après sont remplis simultanément :
- tant que le capteur radar (5, 6) détecte l'objet cible (12) ou un autre objet cible (12) à l'intérieur de la zone de proximité d'éloignement (18) dans sa zone de balayage (9, 10) et
- tant que le capteur radar (5, 6) suit au moins un objet cible (12) dans une zone de suivi (14) prédéfinie en référence au véhicule automobile (1) et différente de la zone d'alerte (13).

9. Procédé selon la revendication 8, **caractérisé en ce que** la zone de suivi (14) est définie dans le sens longitudinal du véhicule (x) derrière la zone d'alerte (13) et se rattache directement à la zone d'alerte (13) dans le sens longitudinal du véhicule (x).

10. Procédé selon la revendication 8 ou 9, **caractérisé en ce que** la longueur (17) de la zone de suivi (14) dans le sens longitudinal du véhicule (x) est comprise dans une plage de valeurs de 5 m à 15 m, notamment de 8 m à 10 m.

11. Procédé selon l'une des revendications 8 à 10, **caractérisé en ce que** la largeur (16) de la zone de suivi (14) dans le sens transversal du véhicule (y) est comprise dans une plage de valeurs de 1 m à 3 m, notamment égale à 2 m, et/ou correspond à la largeur (14) de la zone d'alerte (13).

12. Système d'assistance au conducteur (2) pour un véhicule automobile (1), le système d'assistance au conducteur (2) étant conçu pour émettre un signal d'alerte en présence d'un objet cible (12) dans une zone d'alerte (13) prédéfinie en référence au véhicule automobile (1) et comprend un capteur radar (5, 6), lequel est conçu pour émettre respectivement, au cours de cycles de mesure successifs, des signaux radar électromagnétiques dans une zone de balayage (9, 10) du capteur radar (5, 6), pour recevoir, sous forme de signaux reçus, des signaux radar réfléchis par l'objet cible (12) et pour détecter l'objet cible (12) à l'aide des signaux reçus et le suivre dans la zone de balayage (9, 10) sur les cycles de mesure, le système d'assistance au conducteur (2) comprenant en outre un dispositif de sortie (3) qui est conçu pour émettre le signal d'alerte dans le cas où l'objet cible (12) suivi pénètre dans la zone d'alerte (13) prédéfinie, **caractérisé en ce que**
le dispositif de sortie (3) est en outre conçu pour, après la pénétration de l'objet cible (12) suivi dans la zone d'alerte (13), maintenir l'émission du signal d'alerte tant que le capteur radar (5, 6) détecte l'objet cible (12) ou un autre objet cible (12) dans sa zone de balayage (9, 10) à l'intérieur d'une zone de proximité d'éloignement (18) prédéfinie.

13. Véhicule automobile (1) équipé d'un système d'assistance au conducteur (2) selon la revendication 12.
